# EUROPEAN PATENT APPLICATION

(11) **EP 1 292 063 A1**
(43) Date of publication of application: **12.03.2003**
(21) Application number: 02718552.9
(22) Date of filing: 12.04.2002
(51) Int. Cl.: H04L 7/08, H04Q 7/32

(54) **FRAME SYNCHRONIZATION APPARATUS AND FRAME SYNCHRONIZATION METHOD**

(30) Priority: 16.04.2001 JP 2001117304; 25.04.2001 JP 2001127484
(71) Applicant: MATSUSHITA ELECTRIC INDUSTRIAL CO., LTD., Kadoma-shi, Osaka 571-8501 (JP)
(72) Inventor: MORITA, Minori, Kanazawa-shi, Ishikawa 920-0813 (JP); FUTAGI, Sadaki, Ishikawa-gun, Ishikawa 929-0224 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0203648
(87) International publication number: WO02087141

(57) **Abstract**

Averaging section 101 performs shifting average of the calculated correlation value. Magnification factor multiplying section 102 multiplies the correlation value subjected to shifting average by a predetermined magnification factor. Ideal correlation value generating section 103 uses the reception signal received under channel state without level fluctuation, noise, and delay wave which are caused by fading fluctuation, a known signal inserted in the reception signal, and similar known signal to calculate the ideal correlation value. The ideal correlation value which is subjected to time shifting in time shifting section 104 is outputted to square error detecting section 105. Square error detecting section 105 detects the square error between correlation value from magnification factor multiplying section 102 and ideal correlation value from time shifting section 104. Minimum error detecting section 106 detects the minimum value among the detected square error, namely, minimum square error. Shifting time detecting section 107 detects synchronization time using the detected minimum square error.

## Description

### Technical Field

The present invention relates to frame synchronization apparatus and frame synchronization method using correlation technique to carry out synchronization acquisition and synchronization tracking.

### Background Art

Since there is a lot of movement in mobile communication system of either transmission side apparatus or reception side apparatus or both, the time from transmission moment of a signal transmitted by transmission side until the reception time of such a transmission signal (i.e., propagation delay time) is always changed. Thus, it is necessary that reception side apparatus detects the transmission timing of transmission side apparatus using the reception signal, and acquires the synchronization time based on the detected transmission timing. Particularly, based on transmission timing which is detected using the reception signal, it is necessary that reception side apparatus carries out acquisition of the reception timing (synchronization acquisition) and carries out a precise reception timing (synchronization tracking).

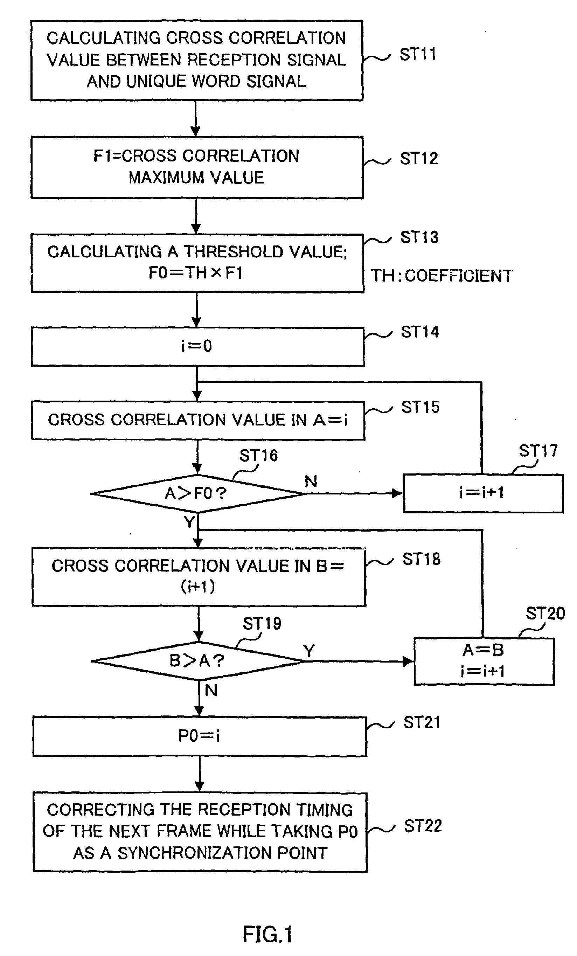

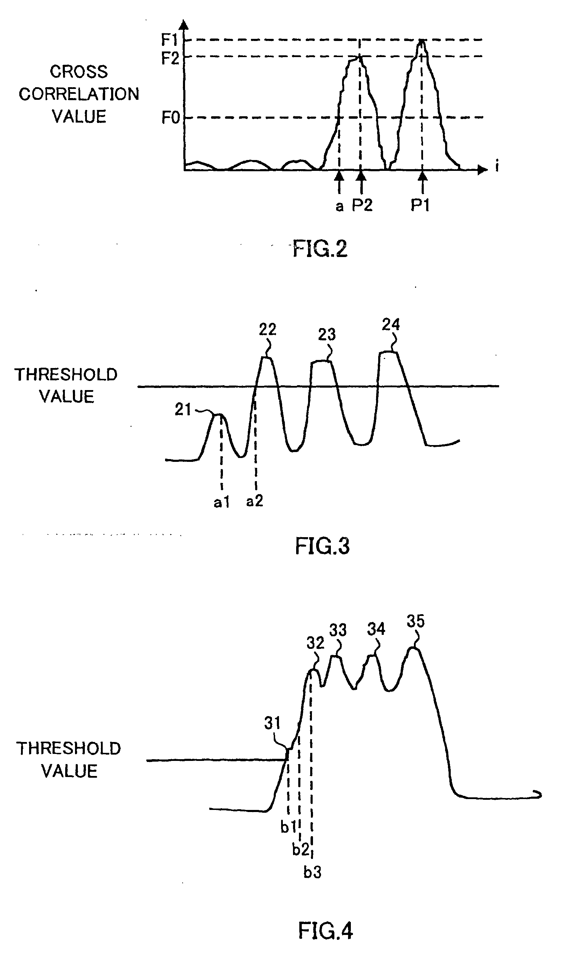

The method disclosed in the Japanese Patent Application No. 11-88455 is an example of a conventional synchronization method in mobile communication. With reference to FIG. 1 and FIG. 2, such a conventional synchronization method will be explained below. FIG. 1 is a flowchart showing a conventional synchronization method. FIG.2 is a graph illustrating cross correlation value in the conventional synchronization method.

In reception side apparatus, cross correlation value is calculated in step (hereinafter, it is abbreviated as "ST") 11 using the reception signal which was transmitted by transmission side apparatus as a transmission signal and unique word signal. In addition, transmission side apparatus transmits a transmission signal which includes such a unique word signal. Here, the cross correlation value which is similar to that shown in FIG. 2 is calculated. In ST12, a maximum value F1 from the calculated cross correlation values is memorized. In ST13, a threshold value F0 is calculated by multiplying the maximum value F1 by a coefficient TH.

In ST14-ST17, the locations of cross correlation values which exceed threshold value F0 are detected by comparing threshold value F0 with the cross correlation value at each sample point (i). First, a point (a) shown in FIG. 2 is detected as the location of cross correlation value which exceeds threshold value in the cross correlation value. The location of point (a) is stored as location (i), and cross correlation value A at location (i) is also stored.

In ST18, the cross correlation value B at location (i+1) which is 1 sample after location (i) is obtained. In ST19, a comparison between the stored cross correlation value A and cross correlation value B is carried out. In ST20, if cross correlation value B at location (i+1) is larger than cross correlation value A, location (i) is updated to location (i+1), and cross correlation value A at the updated location (i) is updated to cross correlation value B. On the other hand, if cross correlation value B at location (i+1) is smaller than cross correlation value A, in ST21, the detected location of the first peak of cross correlation value is the location (i) at the present time point which is considered as a synchronization point (synchronization time) in the next frame. In cross correlation value shown in FIG. 2, location P2 is detected as the location of the first peak in cross correlation value. As location P2 becomes the synchronization time in the next frame, reception timing is corrected.

According to such a synchronization method, reception side apparatus carries out synchronization acquisition and synchronization tracking of a transmission signal transmitted by transmission side apparatus.

However, since the synchronization point (synchronization time) is detected using the comparison result of the calculated cross correlation value and threshold value in the aforementioned conventional synchronization method, there is a problem that a synchronization point is difficult to be detect precisely at certain channel quality.

First, a level of precedence wave (main wave) of transmission signal transmitted by transmission side apparatus may be depressed suddenly in the reception side apparatus at certain channel quality comparing to the level of a delay wave of this transmission signal. In particular, as shown in FIG. 3, cross correlation value level 21 corresponding to precedence wave is depressed suddenly at certain channel quality comparing to cross correlation value levels 22-24 corresponding respectively to first-third delay wave. In this case, cross correlation value at point a1 corresponding to correct synchronization position becomes less than threshold value. As a result, point a2 rather than point a1 is erroneously detected as a synchronization time when using the aforementioned conventional synchronization method.

Second, the level of precedence wave of transmission signal transmitted by transmission side apparatus not only may be depressed suddenly at certain channel quality comparing to the level of delay wave of this transmission signal in the reception side apparatus, but such precedence wave and delay wave may also be received very closely. In particular, as shown in FIG. 4, cross correlation value level 31 corresponding to precedence wave is depressed suddenly at certain channel quality comparing to cross correlation value levels 32-35 corresponding respectively to first-fourth delay waves, additionally, cross correlation value 31 corresponding to precedence wave and cross correlation value 32 corresponding to the first delay wave are very close to each other in time.

According to the conventional synchronization method described above, cross correlation value at point b1 which exceeds threshold value will be stored, this cross correlation value is compared to cross correlation value at point b2 which is 1 sample after point b1, and point b1 is detected as synchronization time only when cross correlation value at point b2 is smaller. However, cross correlation value at point b1 corresponding to correct synchronization time becomes smaller than cross correlation value at point b2. As a result, when using the aforementioned conventional synchronization method, the point b3 rather than point b1 is erroneously detected as a synchronization time.

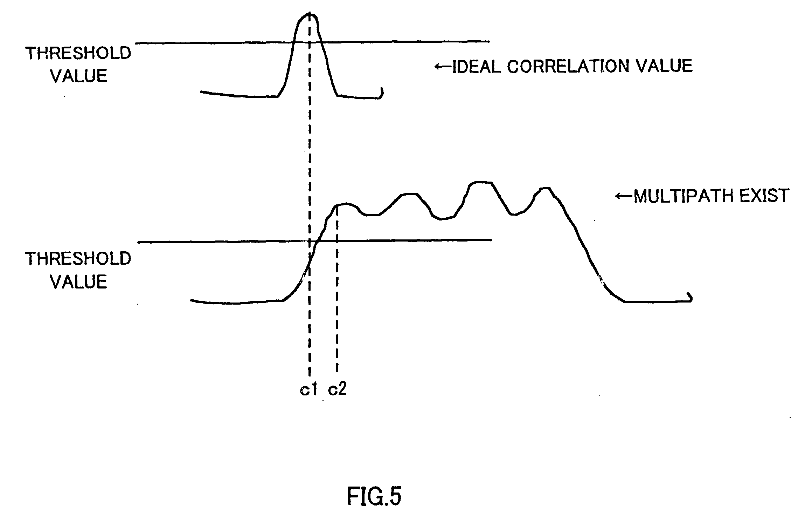

Third, in cross correlation value calculated by reception apparatus at certain channel quality under the effect of multipath, etc., a gap may arise in the location of cross correlation value corresponding to precedence wave. A particular example will be explained with reference to FIG. 5. When there is no multipath, assume for example, that the cross correlation value corresponding to precedence wave becomes maximum at point c1 (i.e., precedence wave can be received surely if reception timing is corrected so that c1 point is the synchronization point). When there is multipath, cross correlation value corresponding to precedence wave is not maximum at point c1, and it may be maximum at point c2 after the point c1. Thus, the position at which cross correlation value corresponding to precedence wave is maximum is shifted due to the influence of delay wave. In the case shown in FIG. 5, point c2 rather than point c1 is detected as a synchronization time according to the conventional synchronization method.

In the aforementioned conventional synchronization method, it is not possible to detect correctly the synchronization point under the influence of channel quality, i.e., synchronization gap may arise. As a result, it becomes difficult to carry out synchronization acquisition as well as synchronization tracking precisely.

Additional conventional frame synchronization apparatus and method is disclosed in the Japanese Patent Application No. 10-70489.

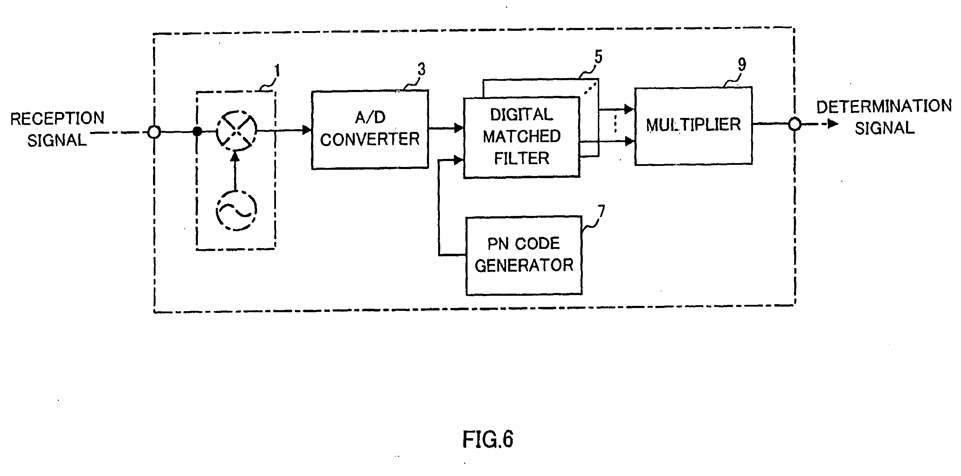

FIG. 6 is a block diagram showing a configuration of a conventional frame synchronization apparatus. In this apparatus, reception signal received from antenna is frequency converted into baseband signal in frequency converting section 1 and digitized in A/D converter 3, this digital data is inputted into n-step digital matched filter 5 to be correlated with a PN code outputted from PN code generator 7. Then, the obtained correlation output is outputted to accumulator 9 where the correlation output is accumulated for each phase. The phase of the maximum accumulation value is determined as initial synchronization time, and this determination signal is outputted.

However, in conventional apparatus, the correlation output of reception signal and known signal is accumulated, thus, it is required to store the accumulated data before the channel so as to carry out the accumulation for detecting initial synchronization time from this accumulation value, resulting in a problem that the hardware scale becomes large because storage capacities, such as RAM, are mostly required to store the accumulated data before the channel.

Moreover, to reduce the hardware scale, an optimum window on the correlation output is set to perform accumulation (such as, several symbols before and after the correlation peak value, etc.) and it is conceivable that correlation output range used to perform accumulation is limited to the window, but in this method, when the window is not optimally set, specifically, when the initial synchronization time period is not included within the range set as a window, for instance, when the level of interference wave is higher than the level of desired wave, there is a problem to mistakenly detect initial synchronization time when a window is set at the interference wave location.

### Disclosure of Invention

It is an object of the present invention to carry out synchronization acquisition and synchronization tracking precisely, and to provide frame synchronization apparatus and frame synchronization method that can minimize the hardware scale.

This object can be achieved by calculating the square error between ideal correlation value that is time shifted by a predetermined shifting time and said correlation value being multiplied by a predetermined magnification factor, and detecting, as a synchronization time, the shifting time corresponding to ideal correlation value at which the calculated square error is minimum.

### Brief Description of Drawings

FIG. 1 is a flowchart showing a conventional synchronization method;
FIG. 2 is a graph illustrating a cross correlation value in a conventional synchronization method;
FIG. 3 is a graph illustrating a first problem in a conventional synchronization method;
FIG. 4 is a graph illustrating a second problem in a conventional synchronization method;
FIG. 5 is a graph illustrating a third problem in a conventional synchronization method;
FIG. 6 is a block diagram showing a configuration of a conventional frame synchronization apparatus;
FIG. 7 is a block diagram showing a configuration of a frame synchronization apparatus according to Embodiment 1 of the present invention;
FIG. 8 is a graph illustrating the concept of a frame synchronization carried out by frame synchronization apparatus according to Embodiment 1 of the present invention;
FIG. 9 is a flowchart showing the operation of a frame synchronization carried out by frame synchronization apparatus according to Embodiment 1 of the present invention;
FIG. 10A is a graph illustrating a gap arises at synchronization time which is detected based on the way of setting a threshold value;
FIG. 10B is a graph illustrating a gap arises at synchronization time which is detected based on the way of setting a threshold value;
FIG. 11 is a set of graphs illustrating correlation values obtained for each branch by frame synchronization apparatus according to Embodiment 2 of the present invention;
FIG. 12 is a block diagram showing a configuration of a frame synchronization apparatus according to Embodiment 2 of the present invention;
FIG. 13 is a block diagram showing a configuration of a frame synchronization apparatus according to Embodiment 3 of the present invention;
FIG. 14A is a graph illustrating frame synchronization carried out by frame synchronization apparatus (first example) according to Embodiment 4 of the present invention;
FIG. 14B is a graph illustrating frame synchronization carried out by frame synchronization apparatus (first example) according to Embodiment 4 of the present invention;
FIG. 15A is a graph illustrating frame synchronization carried out by frame synchronization apparatus (second example) according to Embodiment 4 of the present invention;
FIG. 15B is a graph illustrating frame synchronization carried out by frame synchronization apparatus (second example) according to Embodiment 4 of the present invention;
FIG. 15C is a graph illustrating frame synchronization carried out by frame synchronization apparatus (second example) according to Embodiment 4 of the present invention;
FIG. 16 is a block diagram showing a configuration of a frame synchronization apparatus according to Embodiment 4 of the present invention;
FIG. 17 is a block diagram showing a configuration of a frame synchronization apparatus according to Embodiment 5 of the present invention;
FIG. 18 is a block diagram showing a configuration of a frame synchronization apparatus according to Embodiment 6 of the present invention;
FIG. 19 is a block diagram showing a configuration of a frame synchronization apparatus according to Embodiment 7 of the present invention;
FIG. 20 is a block diagram showing a configuration of a frame synchronization apparatus according to Embodiment 8 of the present invention; and
FIG. 21 is a block diagram showing a configuration of a frame synchronization apparatus according to Embodiment 9 of the present invention.

### Best Mode for Carrying out the Invention

Hereafter, embodiments of the present invention will be specifically described with reference to the accompanying drawings.

### (Embodiment 1)

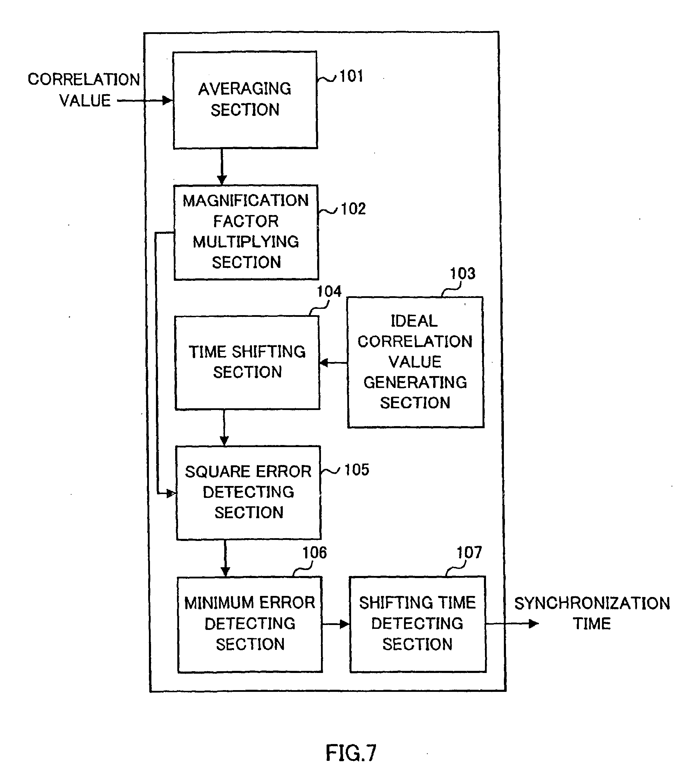

FIG. 7 is a block diagram showing a configuration of a frame synchronization apparatus according to Embodiment 1 of the present invention. In FIG. 7, correlation value is inputted into averaging section 101. Such a correlation value is calculated using a reception signal which was transmitted by transmission side apparatus as a transmission signal and a known signal (known synchronization word) inserted by transmission side apparatus in the reception signal.

Averaging section 101 performs shifting average of the calculated correlation value. This shifting average is performed to compensate for the rapid level fluctuation of correlation value caused by fading. A shifting average can be realized, for example, by adding the value resulted from the multiplication of oblivion coefficient λ by correlation value at each time of the calculated correlation value and the value resulted from the multiplication of (1 - λ) by the average until the last time. If oblivion coefficient λ is large, obtained shifting average can be made to correspond to long interval change, on the contrary, if oblivion coefficient λ is small, obtained shifting average can be made to correspond to short interval change. Magnification factor multiplying section 102 multiplies correlation value of which shifting average is performed by a predetermined magnification factor. The correlation value that is multiplied by a predetermined magnification factor is outputted to square error detecting section 105.

Ideal correlation value generating section 103 calculates correlation value using a known signal included in reception signal under channel environment without level fluctuation, noise, or delay wave which are caused by fading fluctuation, and outputs the calculated correlation value to time shifting section 104 as an ideal correlation value. Time shifting section 104 shifts ideal correlation value over time axis, and the ideal correlation value that was time shifted is outputted to square error detecting section 105.

Square error detecting section 105 detects square error between correlation value from magnification factor multiplying section 102 and ideal correlation value from time shifting section 104. The detected square error is outputted to minimum error detecting section 106. Minimum error detecting section 106 detects the minimum value of the square error detected in square error detecting section 105, i.e., the minimum square error. Shifting time detecting section 107 detects synchronization time using minimum square error detected by minimum error detecting section 106.

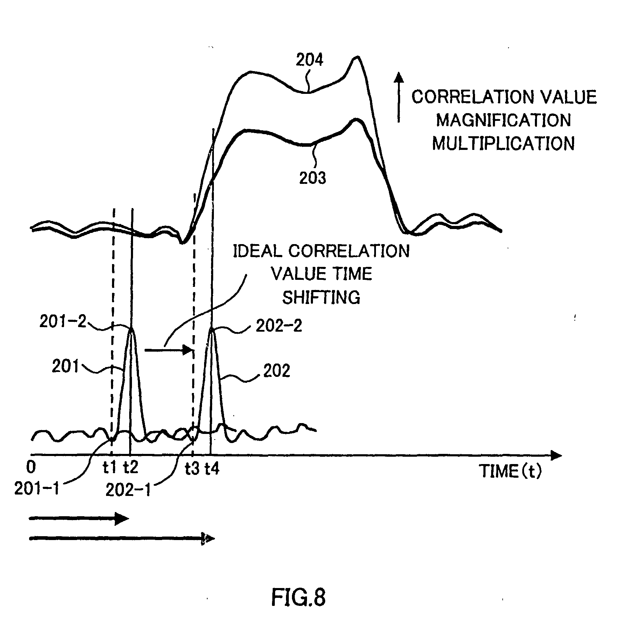

With reference to FIG. 8, a brief explanation of the operation carried out by frame synchronization apparatus having the aforementioned configuration will be given below. FIG. 8 is an illustrating graph showing the concept of frame synchronization carried out by a frame synchronization apparatus according to Embodiment 1 of the present invention.

First, ideal correlation value 201 is calculated using a known signal included in the reception signal received under a channel environment without level fluctuation, noise, or delay wave which are occurred due to fading fluctuations. Next, correlation value is calculated using the reception signal which was transmitted by transmission side apparatus as a transmission signal and a known signal similar to the known signal included in the reception signal. After this, shifting average is performed on the calculated correlation value. Thus, correlation value 203 being subjected to shifting average is obtained.

Using the calculated ideal correlation value 201 and correlation value 203 being subjected to shifting average, and according to the procedures shown below, the location corresponding to precedence wave in correlation value 203 is detected, hence, synchronization time is detected. That is, the range of a starting portion in the ideal correlation value 201 is set firstly. Concretely, the range from the portion 201-1 at which the amount of ideal correlation value is almost 0 until the portion 201-2 at which the amount of ideal correlation value is maximum is set as the rising portion in ideal correlation value 201. At this point, the time corresponding to portion 201-1 in ideal correlation value 201 is t1 whereas the time corresponding to portion 201-2 in ideal correlation value 201 is t2. That is, the timing range corresponding to the rising portion of ideal correlation value 201 becomes from t1 to t2.

In first step, a square error between ideal correlation value 201 and the correlation value of which shifting average is carried out (hereinafter, it is simply referred to as "correlation value") 203 is calculated in the timing range corresponding to the rising portion in ideal correlation value 201. Concretely, square error between correlation value from time t1 to time t2 in ideal correlation value 201 and correlation value from time t1 to time t2 in correlation value 203 is calculated. When the calculated square error is smaller than a previously set minimum value, the calculated square error is set as a new minimum value. In such a setting, the time of which ideal correlation value 201 is time shifted (shifting time) is set as a current synchronization time. In addition, the shifting time of ideal correlation value 201 will be explained later.

In second step, correlation value 203 is multiplied by a magnification factor (here, magnification factor is N). Thus, correlation value 204 is obtained. Furthermore, the square error between ideal correlation value 201 and correlation value 204 is calculated in the timing range corresponding to rising portion of ideal correlation value 201. When the calculated square error is smaller than a previously set minimum value, the calculated square error is set as a new minimum value. In such a setting, similar to first step, the time of which ideal correlation value 201 is time shifted (shifting time) is set as a current synchronization time.

In third step, the magnification factor which is to be multiplied by correlation value 203 is increased and correlation value 203 is then multiplied by the increased magnification factor (here, magnification factor is N2). Furthermore, similar to second step, square error between ideal correlation value 201 and correlation value 203 which is multiplied by a magnification factor N2 (not shown in the figure) is calculated in the timing range corresponding to rising portion of ideal correlation value 201. Then, operations similar to that of second step are performed. After performing operations similar to second step, correlation value 203 is multiplied sequentially by a magnification factor increased until a maximum magnification factor M, then, operations similar to the above-described operations are performed.

In fourth step, the ideal correlation value 201 is shifted over the time axis to the right direction by a minute time T1 (i.e., interval corresponding to minute time T1). At this point, the time at which ideal correlation value 201 is shifted (in other words, shifting time) becomes T1. Then, operations similar to that of first step-third step are performed.

In fifth step, the ideal correlation value 201 is time shifted sequentially only by the aforementioned minute time to the right direction until the shifting time becomes T (that is, shifting time increases as T1×2, T1×3), then, the aforementioned operations of first step-third step are similarly carried out.

In addition, ideal correlation value 202 shown in FIG. 8 is an example of ideal correlation value that is time shifted. Here, the range from the portion 202-1 at which the amount of ideal correlation value 202 is almost 0 until the portion 202-2 at which the amount of ideal correlation value 202-2 is maximum is set as the rising portion in ideal correlation value 202. At this point, the time corresponding to portion 202-1 in ideal correlation value 202 is t3 whereas time corresponding to portion 202-2 in ideal correlation value 202 is t4. That is, the timing range corresponding to rising portion of ideal correlation value 202 becomes from t3 to t4. In addition, the multiplication of correlation value by a magnification factor may not be performed here, but multiplication, shifting, and square error calculation may be performed on ideal correlation value.

If such an ideal correlation value 202 is taken as an example, then in first step, square error between correlation value from time t3 to time t4 in ideal correlation value 202 and correlation value from time t3 to time t4 in correlation value 203 is calculated. As described above, when the calculated square error is smaller than a previously set minimum value, the calculated square error is set as a new minimum value. In such a setting, the time that ideal correlation value 202 is time shifted (shifting time) is set as a current synchronization time. Similarly, in second step, correlation value 203 is multiplied by a magnification factor (here, magnification factor is N). Thus, correlation value 204 is obtained. Furthermore, the square error between ideal correlation value 202 and correlation value 204 is calculated in the timing range corresponding to rising portion of ideal correlation value 202. Then, when the calculated square error is smaller than a previously set minimum value, the calculated square error is set as a new minimum value. In such a setting, similar to first step, the time that ideal correlation value 201 is time shifted is set as a current synchronization time.

Similarly, in third step, magnification factor which is to be multiplied by correlation value 203 is increased and the correlation value 203 is then multiplied by the increased magnification factor (here, the magnification factor is N2). Furthermore, similar to second step, square error between ideal correlation value 202 and correlation value 203 which is multiplied by magnification factor N2 (not shown in the figure) is calculated in the timing range corresponding to rising portionof ideal correlationvalue 202. Then, operations similar to that of second step are performed. After performing operations similar to second step, correlation value 203 is multiplied by a magnification factor increased sequentially until a maximum magnification factor M, operations similar to the above-described operations are performed.

The synchronization time which is set when the operations in first step-fifth step are completed is detected as a final synchronization time. Concretely, assume the case when operations in fifth step are completed and square error between ideal correlation value 202 and correlation value 203 which is multiplied by a magnification factor (N≦X≦M) is set temporarily as a minimum value, then, t4 is detected as a synchronization time. In such a case, since the rising portion of ideal correlation value 202 has agreed mostly with the portion which corresponds to the interval time t3-t4 in correlation value 203 that is multiplied by the magnification factor X, it becomes clear that the precedence wave is located in the portion corresponding to time t4 in correlation value 203. Up to this point, an outline of the operations carried out by frame synchronization apparatus according to the present embodiment have been explained above.

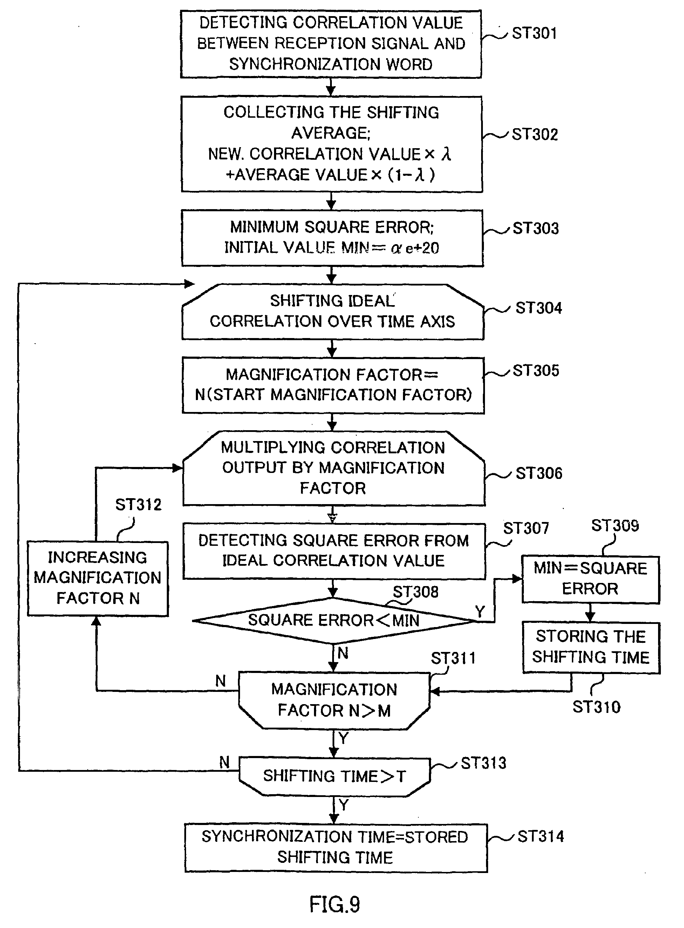

With reference to FIG. 9, an explanation of operations carried out by frame synchronization apparatus having the aforementioned configuration will be given below. FIG. 9 is a flowchart showing frame synchronization operation carried out by a frame synchronization apparatus according to Embodiment 1 of the present invention.

First, correlation value is calculated using a known signal included in reception signal that was transmitted by transmission side apparatus as a transmission signal in ST301. In ST302, shifting average of correlation value calculated in ST301 is carried out. In order to detect the minimum square error, a MIN of an initial value (such as, 1.0e+20, etc.) is set in ST303.

In ST304, ideal correlation value is time shifted by a predetermined time. For example, such a predetermined time is 0 in the first loop, and after the second loop it may be a minute time T1. In ST305, an initial value of magnification factor N to be multiplied by correlation value is set. In ST306, magnification factor N is multiplied by correlation value. In ST307, the square error between ideal correlation value and the correlation value which is multiplied by magnification factor N is calculated.

In ST308, comparison between square error calculated in ST307 and MIN is carried out. When square error value is smaller than MIN, MIN value is updated to this square error value (ST309), and the time of which the ideal correlation value is time shifted (shifting time) is stored as a current synchronization time (310), otherwise, processing proceeds to ST311. On the contrary, when square error value is larger than MIN in ST308, processing proceeds to ST311.

In ST311, comparison between magnification factor N and maximum magnification factor M is carried out. When magnification factor N is less than maximum magnification factor M, magnification factor N is increased to decrease the effect depression level of precedence wave in the correlation value (ST312), further processing proceeds to ST306 described above. On the other hand, when magnification factor N is larger than maximum magnification factor M, using such a maximum magnification factor M to decrease the effect level precedence wave, enough level can be yet achieved, further processing proceeds to ST313.

In ST313, comparison between the present shifting time and T is carried out. When present shifting time is smaller than T and is within the detected window range, further processing proceeds to the aforementioned ST304. On the other hand, when present shifting time is larger than T and is out of the detected window range, further processing proceeds to ST314. In ST314, the presently stored shifting time is detected as a final synchronization time. The operations carried out by frame synchronization apparatus according to the present embodiment have been explained above.

As described above in the present embodiment, the square error between ideal correlation value which is time shifted by predetermined time and correlation value that is multiplied by predetermined magnification factor is calculated within the timing range corresponding to rising portion of said ideal correlation value. Furthermore, the shifting time corresponding to ideal correlation value of a minimum square error between ideal correlation value which is time shifted by predetermined time and correlation value that is multiplied by predetermined magnification coefficient is detected as a final synchronization time.

Therefore, even the level of precedence wave (main wave) of transmission signal transmitted by transmission side apparatus is depressed suddenly at certain channel quality comparing to the level of delay wave of this transmission signal, it is possible to detect precisely the location of precedence wave in correlation value. Second, even if not only the level of precedence wave of transmission signal transmitted by transmission side apparatus is depressed suddenly at certain channel quality comparing to the level of delay wave of this transmission signal, but also the precedence wave and delay wave are received very close in time to each other, it is possible to detect precisely the location of precedence wave in correlation value. Third, even if a gap in the location where cross correlation value corresponding to precedence wave appears is occurred at certain channel quality under the influence of multipath, etc. it is also possible to detect precisely the location of precedence wave in correlation value. As a result, it is possible to carry out synchronization acquisition and synchronization tracking precisely according to the present embodiment.

In addition to the frame synchronization method described above, the inventors have further invented another method of solving the aforementioned problems. That is to say, in another method, first, square error between ideal correlation value which is time shifted by predetermined time and correlation value that is multiplied by predetermined magnification factor is calculated in the time range corresponding to starting portion of said ideal correlation value. Then, magnification factor which is multiplied by correlation value to minimize square error between correlation value and ideal correlation value is detected. After this, the time that is exceeds a primarily predetermined threshold value is detected as a final synchronization time in correlation value that multiplied by the detected magnification factor. According to such a method, it is possible to carry out synchronization acquisition and synchronization tracking precisely comparing to the conventional method.

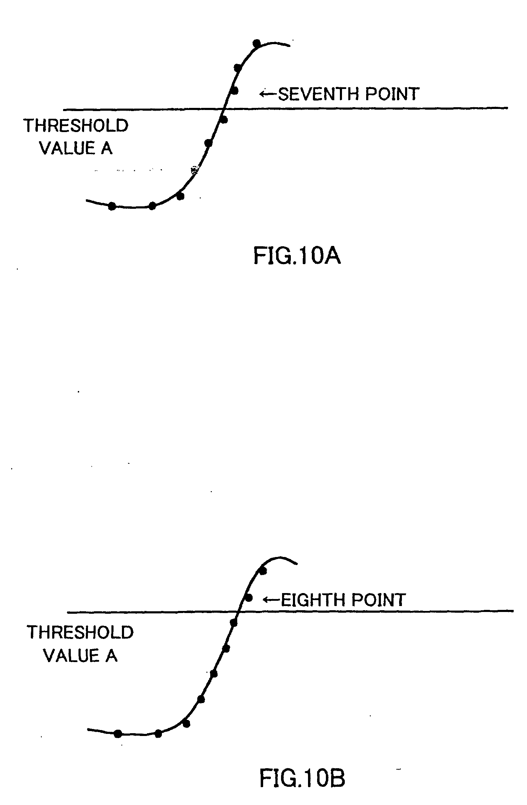

However, when adopting such a method, few gaps may arise in the detected synchronization time based on threshold value setting method. Referring to FIG. 10(A) and FIG. 10(B), specific explanation is given below. FIG.10 (A) and FIG. 10 (B) are graphs illustrating the gaps arising at synchronization time which are detected based on threshold value setting method. As shown in FIG. 10(A) and FIG. 10(B), correlation value is formed by gathering each point at frequency 1/XMHz. Therefore, it is expected that a gap occurs in the detected synchronizing time based on how a threshold value is set. As shown in FIG. 10(A), the time corresponding to the seventh point that directly exceeds threshold value A is detected as a final synchronization time when threshold value A is utilized. However, the time corresponding to the eighth point that directly exceeds threshold value B is detected as a final synchronization time when threshold value B is utilized as shown in FIG. 10(B).

On the other hand, the synchronization time is detected without utilizing a threshold value as described above according to the present embodiment. That is, the synchronization time can be detected precisely without depending upon threshold value. In addition, since it is not necessary to carry out processing in which detected magnification factor is multiplied again by correlation value according to the present embodiment, it is possible to reduce the required amount of operations.

### (Embodiment 2)

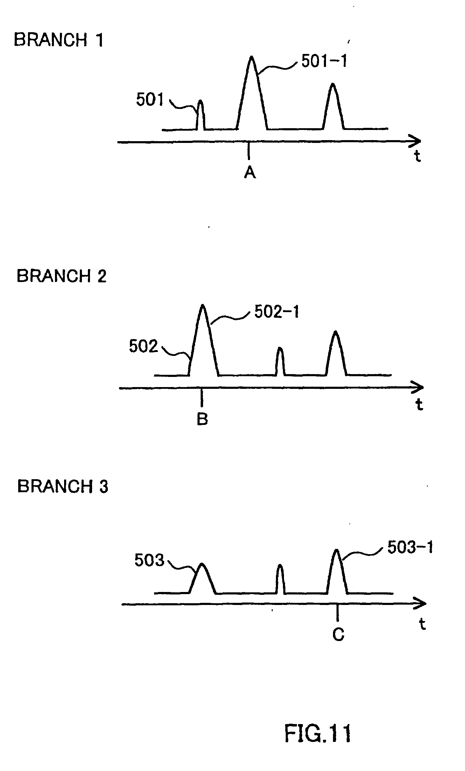

The case where synchronization time is detected using a plurality of branches of the correlation value of Embodiment 1 will be explained with reference to FIG. 11 in the present embodiment. FIG. 11 is a set of graphs showing the correlation values obtained for each branch by frame synchronization apparatus according to Embodiment 2 of the present invention. The case when using 3 branches as a plurality of branches is shown in FIG. 11.

In FIG.11, correlation value 501 is the correlation value that is calculated using branch 1 of the reception signal and known signal included in reception signal. Similarly, correlation value 502 (503) is the correlation value that is calculated using branch 2 (branch 3) of the reception signal and known signal included in reception signal.

First, after detecting the correlation value that becomes maximum (maximum correlation value) in each of correlation value 501 of branch 1 to correlation value 503 of branch 3, the time corresponding to maximum correlation value is detected. Concretely, maximum correlation value 501-1 is detected among correlation values 501 of branch 1, and the time A corresponding to such a maximum correlation value 501-1 is detected. Similarly, maximum correlation value 502-1 (maximum correlation value 503-1) is detected among correlation values 502 (correlation values 503) of branch 2 (branch 3), and the time B (time C) corresponding to such a maximum correlation value 502-1 (maximum correlation value 503-1) is detected.

Next, the maximum correlation value which is located at the earliest time is detected among maximum correlation values of each detected branch. Here, maximum correlation value 502-1 is detected. Then, frame synchronization processing described in Embodiment 1 is carried out using correlation value of the branch corresponding to the detected maximum correlation value. Frame synchronization is carried out using correlation value of branch corresponding to maximum correlation value 502-1, namely, correlation value 502 of branch 2.

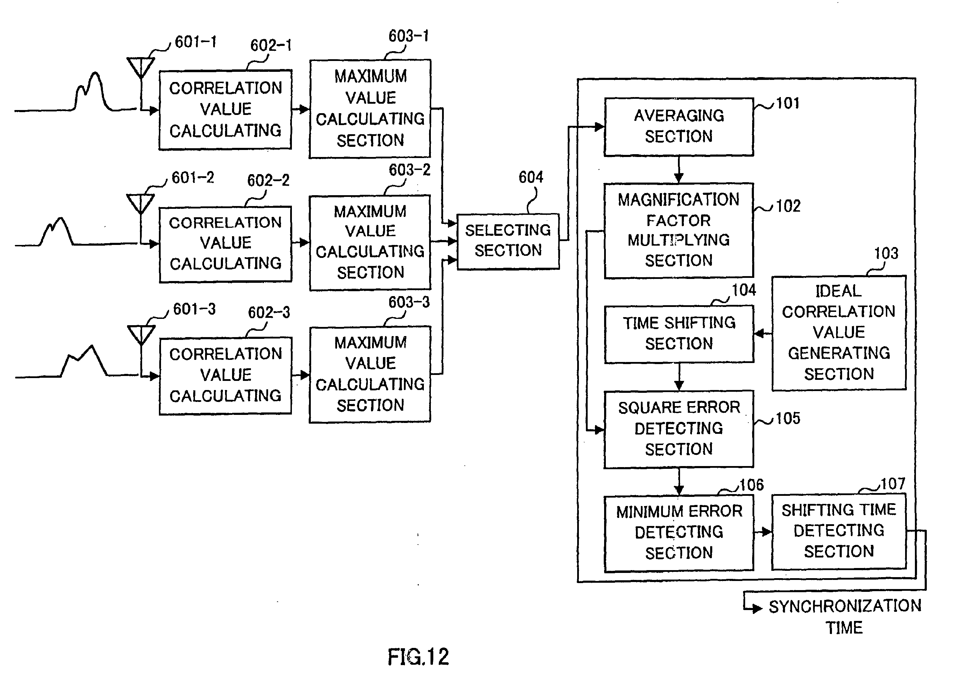

With reference to FIG. 12, a configuration of a frame synchronization apparatus for realizing frame synchronization in accordance to the present embodiment will be explained below. FIG. 12 is a block diagram showing a configuration of a frame synchronization apparatus according to Embodiment 2 of the present invention. In addition, sections shown in FIG. 12 which are similar to that in Embodiment 1 (FIG. 7) are assigned similar reference numerals as in FIG. 7 and explanations thereof will be omitted.

Correlation value calculating section 602-1 calculates correlation value of branch 1 using a known signal included in the signal received by antenna 601-1 (reception signal of branch 1). Correlation value calculating section 602-2 calculates correlation value of branch 2 using a known signal included in the signal received by antenna 601-2 (reception signal of branch 2). Similarly, correlation value calculating section 602-3 calculates correlation value of branch 3 using a known signal included in the signal received by antenna 601-3 (reception signal of branch 3).

Maximum value detecting section 603-1 detects maximum correlation value in correlation value of branch 1, and the time corresponding to the detected maximum correlation value is detected. Maximum detecting section 603-1 outputs correlation value of branch 1 and detected time to selecting section 604. Similarly, maximum value detecting section 603-2 (603-3) detects maximum correlation value in correlation value of branch 2 (branch 3), and the time corresponding to detected maximum correlation value is detected. Maximum detecting section 603-2 (603-3) outputs the correlation value of branch 2 (branch 3) and the detected time to selecting section 604.

First, selecting section 604 detects the smallest value of time among all the times from maximum value detecting sections 603-1 to 603-3. In addition, selecting section 604 outputs correlation value corresponding to the detected time among all correlation values from maximum value detecting section 603-1 to 603-3 to averaging section 101.

In other words, selecting section 604 detects maximum correlation value located at the earliest time among maximum correlation values of all branches, and outputs correlation value of the branch corresponding to the detected maximum correlation value to averaging section 101. The detailed explanation of the configuration from averaging section 101 to shifting time detecting section 107 is omitted because it is similar to that explained in Embodiment 1.

Accordingly, the correlation value which is located at the earliest time among correlation values of a plurality of branches is detected in accordance to the present embodiment, and synchronization time is detected using only the detected correlation value. As a result, synchronization time can be detected without using correlation value of the branch of which precedencewave degrades by influence of fading, etc. Therefore, it is possible to improve the precision of synchronization acquisition and synchronization tracking in comparison with Embodiment 1.

### (Embodiment 3)

The case where synchronization time is detected using the result of accumulating the correlation values of a plurality of branches given in Embodiment 1 will be explained in the present embodiment with reference to the aforementioned FIG. 11. In addition, the case when using 3 branches as a plurality of branches is explained as an example.

In the present embodiment, the result of accumulating correlation values 501-503 of respective branches 1-3, is used to perform frame synchronization explained in Embodiment 1. Accordingly, it is possible to carry out a high speed synchronization acquisition and synchronization tracking comparing to Embodiment 1 or Embodiment 2 because the time which is necessary for averaging the correlation value can be reduced.

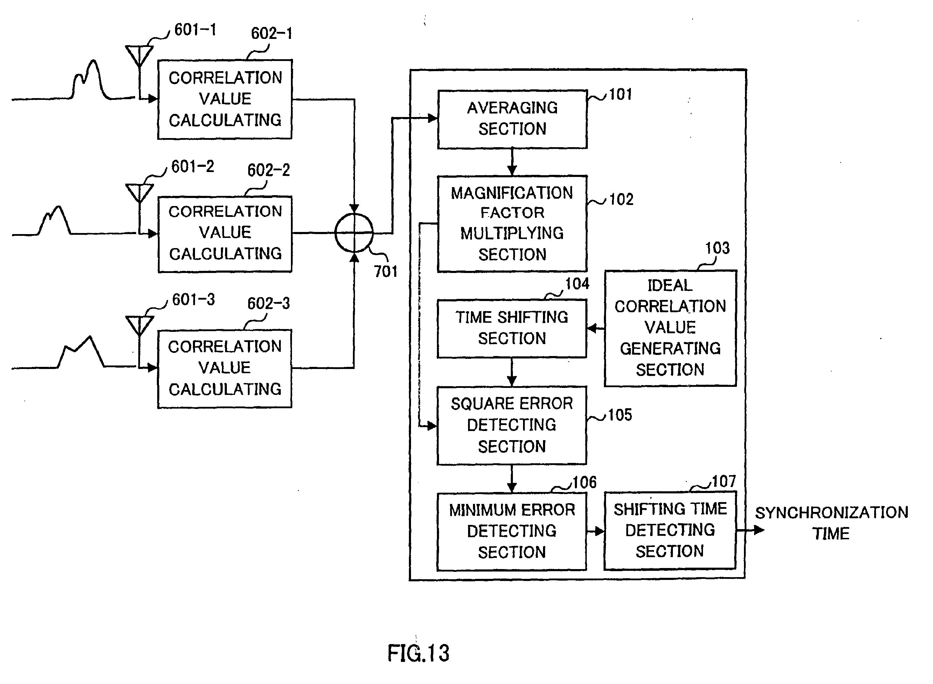

Next, a configuration of frame synchronization apparatus for realizing frame synchronization in accordance to the present embodiment is to be explained below with reference to FIG. 13. FIG. 13 is a block diagram showing a configuration of a frame synchronization apparatus according to Embodiment 3 of the present invention. In addition, sections in FIG. 13 which are similar to those in Embodiment 1 (FIG. 7) and Embodiment 2 (FIG. 12) are assigned the same reference numerals as in FIG. 7 and FIG. 12 and explanation thereof is omitted. Accumulator 701 outputs the result of accumulating correlation value of branch 1 to correlation value of branch 3 as a new correlation value to averaging section 101.

Thus, synchronization time, according to the present embodiment, is detected using the result of accumulating correlation values of a plurality of branches. As a result, it is possible to carry out higher speed synchronization acquisition and synchronization tracking comparing to Embodiment 1 or Embodiment 2 because the time which is necessary for averaging correlation value can be reduced.

### (Embodiment 4)

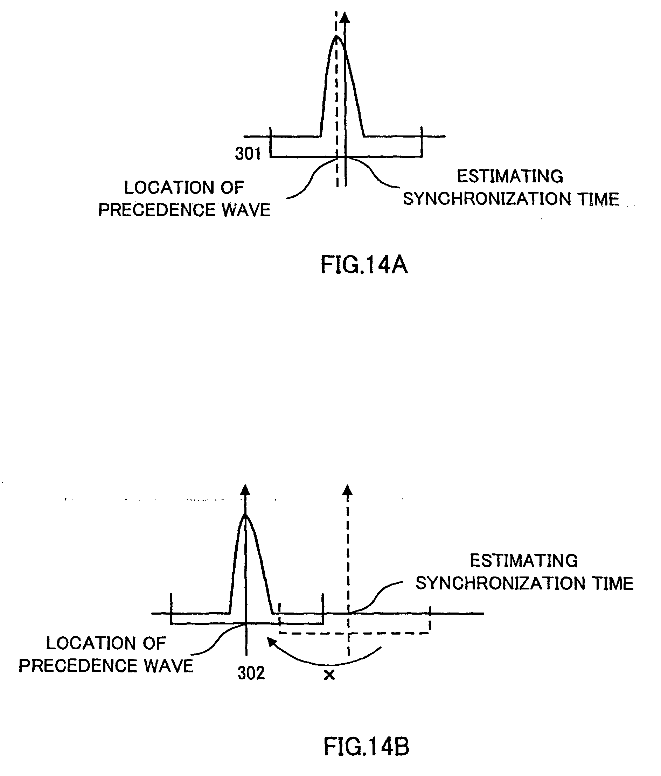

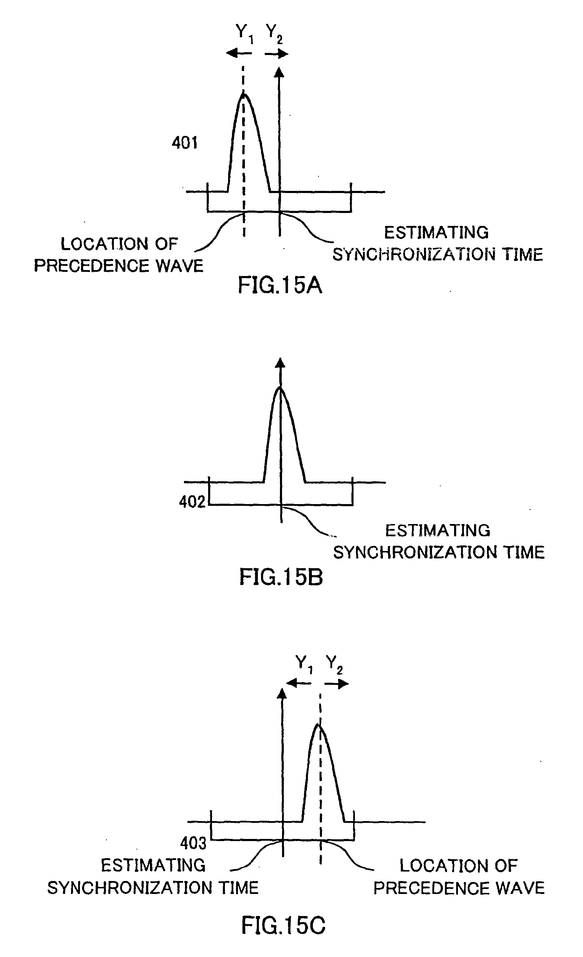

The case when synchronization time, given in Embodiment 1-Embodiment 3, is detected precisely and at high speed will be explained in the present embodiment. In the present embodiment, an estimating synchronization time is shifted using the location of precedence wave detected in Embodiment 1-Embodiment 3. Here, estimating synchronization time is the synchronization time which is beforehand estimated by initial synchronization used in conventional method. Specific explanation is given with reference to FIG. 14 and FIG. 15.

FIG. 14 illustrates frame synchronization carried out by frame synchronization apparatus (first example) according to Embodiment 4 of the present invention. FIG. 15 illustrates frame synchronization carried out by frame synchronization apparatus (second example) according to Embodiment 4 of the present invention.

When the location of detected precedence wave is largely shifted (for instance, more than time corresponding to 1 symbol) in the estimating synchronization time, as shown in FIG 14 (B), estimating synchronization time is shifted to the shifted direction (X direction in the figure).

On the other hand, when the location of detected precedence wave is slightly shifted (for instance, less than time corresponding to 1 symbol) in the estimating synchronization time (FIG. 15 (B)), as shown in FIG 14 (A), the direction of estimating synchronization time shifting is detected. Specifically, in the case shown in FIG. 15 (A), estimating synchronization time shifted to Y2 direction from the location of precedence wave is detected, and in the case shown in FIG. 15 (C), estimating synchronization time shifted to Y1 direction from the location of precedence wave is detected.

Whenever the estimating synchronization time shifting is detected, a counter is increased in correspondence to such an estimating synchronization time shifting. That is, in case of FIG. 15 (A), thecounter is increased according to Y2 direction, whereas in case of FIG. 15 (C), the counter is increased according to Y1 direction.

When the aforementioned counter exceeds a constant value, estimating synchronization time is shifted by a minute time (for example, time corresponding to 1 sample) in the direction that is reverse to direction corresponding to the counter. For example, estimating synchronization time is shifted by a minute time in Y1 (Y2) direction when the counter corresponding to Y2 (Y1) direction exceeds a constant value.

The aforementioned processing continues until the gap between estimating synchronization time and precedence wave location becomes zero. Thus, even if the synchronization gap is largely occurred, it is possible to perform high speed synchronization tracking, and even if the synchronization gap is slightly occurred, it is also possible to perform a high precision synchronization tracking.

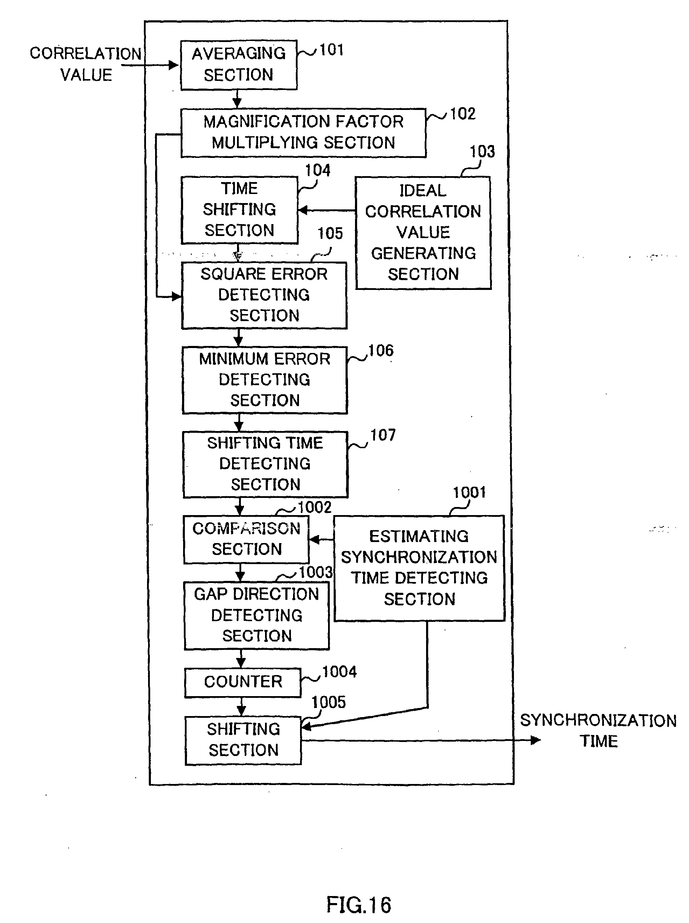

Next, configuration of a frame synchronization apparatus for realizing frame synchronization in accordance to the present embodiment is to be explained below with reference to FIG. 16. FIG. 16 is a block diagram showing a configuration of a frame synchronization apparatus according to Embodiment 4 of the present invention. Although the case when detecting precedence wave location using Embodiment 1 is given as an example, but, actually in FIG. 16, it is possible to detect precedence wave location using Embodiment 2 or Embodiment 3. In addition, sections in FIG. 16 which are similar to that in Embodiment 1 (FIG. 7) are assigned the same reference numerals as in FIG. 7 and explanations thereof will be omitted.

Estimating synchronization time detecting section 1001 detects synchronization time using initial synchronization, and outputs such synchronization time as an estimating synchronization time to comparison section 1002 and shifting section 1005. Comparison section 1002 compares between synchronization time detected by shifting time detecting section 107 (that is, precedence wave location) and estimating synchronization time from estimating synchronization time detecting section 1001. When a difference gap between precedence wave location and estimating synchronization time occurred, comparison section 1002 outputs gap information showing that a gap has been occurred to gap direction detecting section 1003. When a gap does not occur between precedence wave location and estimating synchronization time, such an estimating synchronization time is detected as a final synchronization time.

When gap information is received from comparison section 1002, gap direction detecting section 1003 detects to which direction the estimating synchronization time is shifted with respect to precedence wave location, and outputs the result of detection to counter 1004. Counter 1004 increases counting according to direction where estimating synchronization time is shifted (for example, counter corresponding to Y1 direction and counter corresponding to Y2 direction as shown in FIG. 15), and outputs the counter value to shifting section 1005.

When counter value exceeds a constant value, shifting section 1005 shifts estimating synchronization time by a minute time to direction-reverse to direction corresponding to the counter. Thus, estimating synchronization time shifted by a minute time is detected as final synchronization time.

### (Embodiment 5)

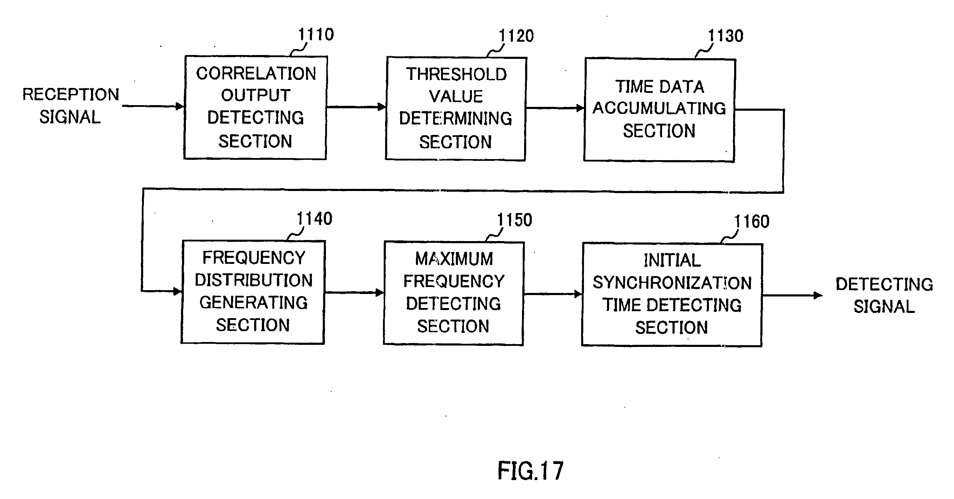

FIG. 17 is a block diagram showing a configuration of a frame synchronization apparatus according to Embodiment 5 of the present invention.

As shown in FIG. 17, frame synchronization apparatus comprises correlation output detecting section 1110, threshold value determining section 1120, time data storing section 1130, frequency distribution generating section 1140, maximum frequency detecting section 1150 and initial synchronization time detecting section 1160.

Correlation output detecting section 1110 detects the correlation output of the reception signal of a predetermined time and synchronization word.

Threshold value determining section 1120 compares correlation output detected by correlation output detecting section 1110 with a constant threshold value set beforehand, and determines whether the detected correlation output exceeds the threshold value.

Time data storing section 1130 stores, for instance in RAM, the data of time corresponding to correlation output which is determined to be exceeded threshold value as a determination result of threshold value determining section 1120.

Frequency distribution generating section 1140 generates frequency distribution using the time data stored in time data storing section 1130.

Maximum frequency detecting section 1150 detects maximum frequency among frequency distribution generated by frequency distribution generating section 1140.

Initial synchronization time detecting section 1160 detects the time corresponding to maximum frequency detected by maximum frequency detecting section 1150 as an initial synchronization time.

Operations of frame synchronization apparatus comprising the aforementioned configuration will be explained below.

First, reception signal of a predetermined time received from a not shown antenna is inputted in correlation output detecting section 1110, and correlation output of the inputted reception signal of predetermined time and synchronization word is detected. In addition, detected correlation output is compared to threshold value in threshold value determining section 1120, and it is determined whether the detected correlation output exceeds threshold value. Then, data of the time corresponding to correlation output which is determined to be exceeded threshold value as a determination result is stored in RAM in time data storing section 1130.

Further, frequency distribution is generated in frequency distribution generating section 1140 using stored time data. Then, maximum frequency in the generated frequency distribution is detected in maximum frequency detecting section 1150, and the time corresponding to detected maximum frequency is set as an initial synchronization time in initial synchronization time detecting section 1160.

Thus, frame synchronization apparatus according to the present embodiment determines whether the detected correlation output exceeds a threshold value, and since only the time data corresponding to correlation output determined to be exceeded the threshold is stored, only a storage capacity to store the time data corresponding to correlation output determined to be exceeded the threshold value is needed, hence, it is possible to minimize the hardware scale.

Moreover, the frequency distribution is generated using the stored time data and since the time of maximum frequency in such frequency distribution is set as an initial synchronization time, it is not necessary to set a window primarily, and even when the level of an interference wave is larger than level of desired wave, incorrect detection of initial synchronization time at interference wave location can be prevented, and hence, initial synchronization time can be correctly detected.

Furthermore, although the standard of determination of comparison whether threshold value is exceeded or not is carried out in threshold determining section 1120 according to the present embodiment, but it is not necessarily limited to this and any determination standard of comparison whether above or equal threshold value can be used.

### (Embodiment 6)

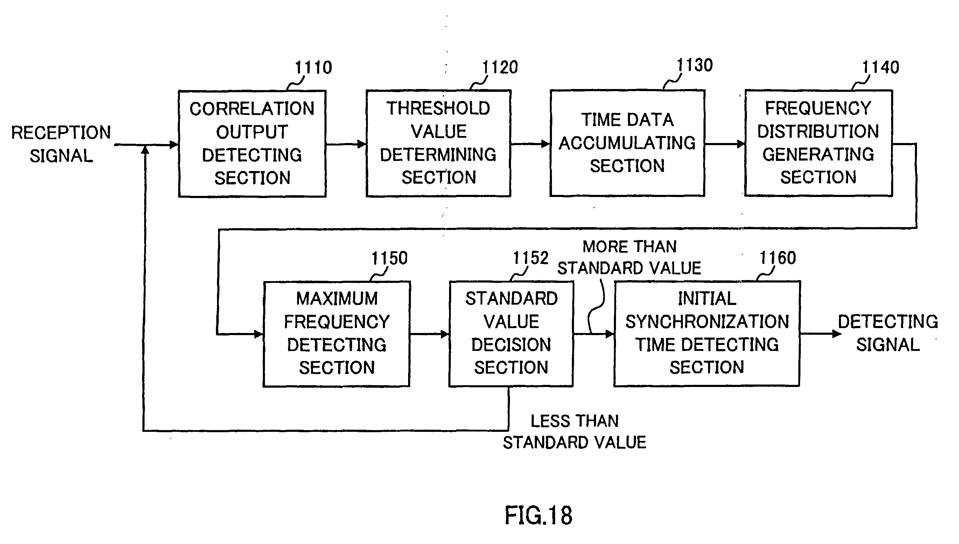

FIG. 18 is a block diagram showing a configuration of a frame synchronization apparatus according to Embodiment 6 of the present invention. The basic configuration of such a frame synchronization apparatus is similar to the frame synchronization apparatus shown in FIG. 17, thus, similar sections are assigned the same reference numerals and explanation thereof is omitted.

The present embodiment is characterized by having a standard value decision section 1152 that decides whether the detected maximum frequency is less than a standard value (for instance, number of frames in a predetermined time as an ideal value). In such a case, when the detected maximum frequency is decided to be less than standard value, initial synchronization processing is carried out again from the beginning so as to be controlled.

Operations of frame synchronization apparatus comprising the aforementioned configuration will be explained below.

First, reception signal of predetermined time received from antenna is inputted into correlation output detecting section 1110, correlation output of an inputted reception signal of predetermined time and synchronization word is detected. In addition, detected correlation output is compared to threshold value in threshold value determining section 1120, and it is determined whether the detected correlation output exceeds the threshold value. Then, data of the time corresponding to correlation output which is determined to be exceeded threshold value as a determination result is stored in RAM in time data storing section 1130.

Further, frequency distribution is generated in frequency distribution generating section 1140 using stored time data. Then, maximum frequency in the generated frequency distribution is detected in maximum frequency detecting section 1150, and in standard value decision section 1152, it is decided whether the detected maximum frequency is smaller than standard value.

Referring to decision result, when the detected maximum frequency is less than standard value, it is decided that initial synchronization time is erroneously detected, and initial synchronization processing is carried out again from the beginning.

On the other hand, when the detected maximum frequency exceeds standard value, the time corresponding to detected maximum frequency is set as an initial synchronization time in initial synchronization time detecting section 1160.

Thus, in frame synchronization apparatus according to the present embodiment, initial synchronization time is detected, maximum frequency is compared with standard value, and it is decided whether the detected initial synchronization time is wrong, since initial synchronization processing is carried out again from the beginning when it is decided that error is occurred, hence, it is possible to obtain a precise and correct initial synchronization time and also possible to reduce processing time during tracking.

In addition, although the standard of decision of comparison whether standard value is below is carried out in standard value decision section 1152 according to the present embodiment, but it is not necessarily limited to this and any decision standard of comparison whether standard value is achieved can be used.

### (Embodiment 7)

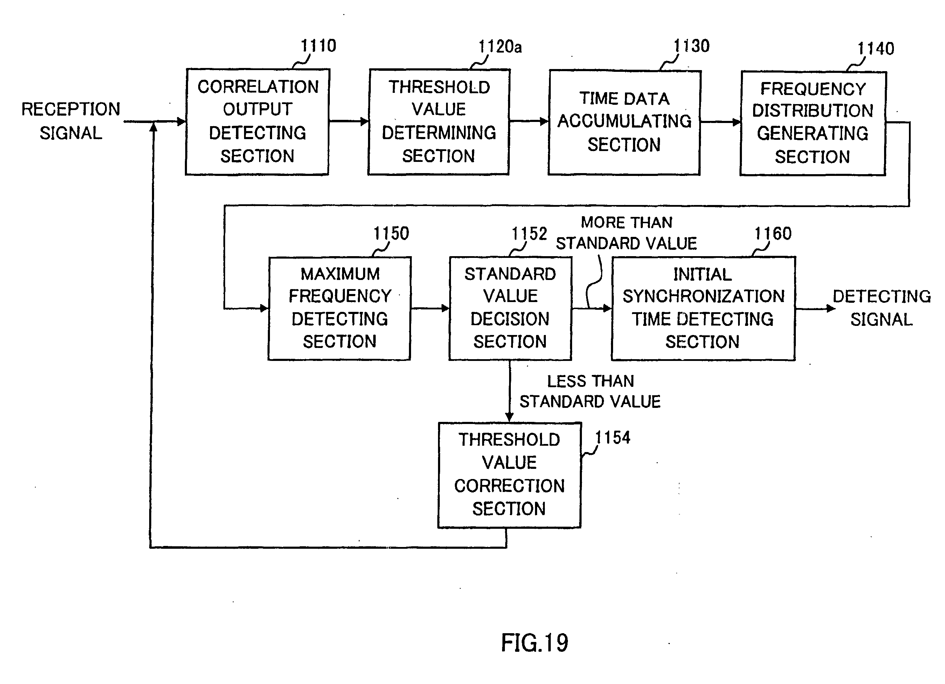

FIG. 19 is a block diagram showing a configuration of a frame synchronization apparatus according to Embodiment 7 of the present invention. In addition, the basic configuration of such a frame synchronization apparatus is similar to the frame synchronization apparatus shown in FIG. 18, and similar configuration elements are assigned the same reference numerals and explanation thereof is omitted.

The present embodiment is characterized by having a threshold value correction section 1154 which corrects the threshold value when the threshold value is changed based on the comparison with the correlation output rather than fixed (hereinafter, threshold value determining section using a changeable threshold value is assigned a reference numerals 1120a), and when it is decided that the detected maximum frequency is below standard value. In such a case, when the detected maximum frequency is decided to be less than standard value, initial synchronization location is controlled from the beginning using the corrected threshold value.

Here, as a threshold value correction method, initial threshold value is set to a small value and magnification coefficient is set beforehand according to maximum frequency, the maximum frequency is detected every time threshold value is corrected, if the threshold value is correct, threshold value is multiplied by magnification factor corresponding to the detected maximum frequency, and threshold value increases by several dB's.

Operations of frame synchronization apparatus comprising the aforementioned configuration will be explained below.

First, a reception signal of a predetermined time received from antenna is inputted into correlation output detecting section 1110, correlation output of the inputted reception signal of predetermined time and synchronization word is detected. In threshold value determining section 1120a comparison between the detected correlation output and threshold value (threshold value after correction if there were correction) is executed, and whether the detected correlation output exceeds threshold value is decided. Data of the time corresponding to correlation output which is determined to be exceeded threshold value as a determination result is stored in RAM of time data storing section 1130.

Then, frequency distribution is generated in frequency distribution generating section 1140 using stored time data. The maximum frequency in the generated frequency distribution is detected in maximum frequency detecting section 1150, and in standard value deciding section 1152, it is decided whether the detected maximum frequency is smaller than standard value.

Moreover, referring to the decision result, when detected maximum frequency is less than standard value, it is decided that the detected initial synchronizing time is wrong, and threshold value is multiplied by magnification factor corresponding to the detected maximum frequency in threshold value correction section 1154, after the threshold value has been increased by several dB's, initial synchronization process is carried out again from the beginning using threshold value after correction.

On the other hand, when the detected maximum frequency exceeds the standard value, the time corresponding to detected maximum frequency is set as an initial synchronization time in initial synchronization time detecting section 1160.

Thus, in the frame synchronization apparatus according to the present embodiment, initial synchronization time is detected, maximum frequency is compared with standard value, and it is decided on the detected initial synchronization time whether it is wrong or not, and when it is decided that error was occurred, an optimum threshold value can be set according to channel propagation environments, as initial synchronization process is executed again from the beginning after correction the threshold value, and it is possible to improve precision of the decision processing that uses the threshold value. Moreover, even when carrier-to-interference (CI) ratio is low, it is possible to detect precisely the initial synchronization time since threshold value is optimally set.

### (Embodiment 8)

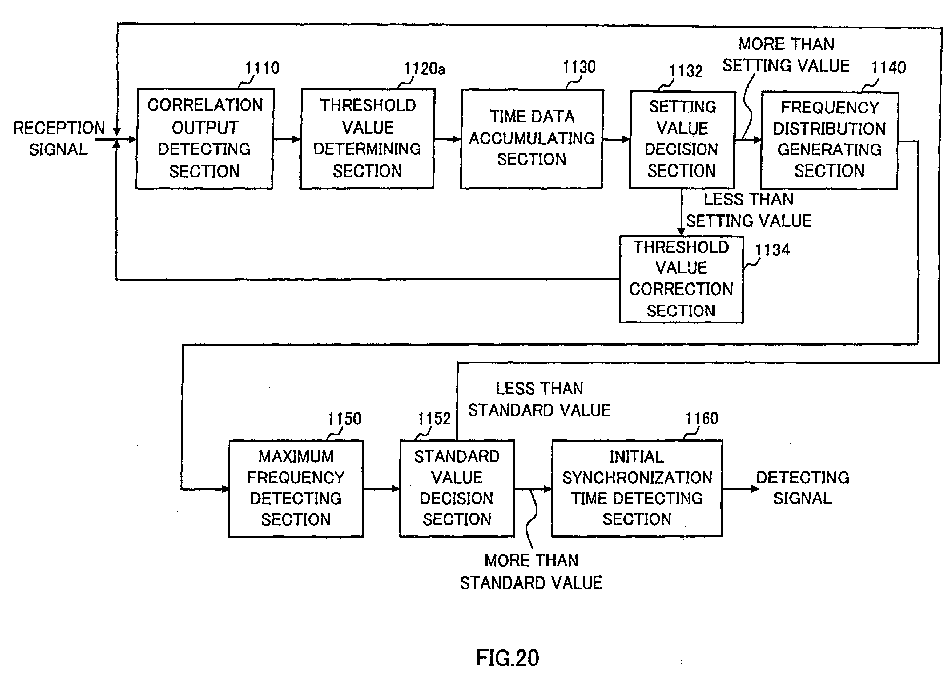

FIG. 20 is a block diagram showing a configuration of a frame synchronization apparatus according to Embodiment 8 of the present invention. In addition, the basic configuration of such a frame synchronization apparatus is similar to the frame synchronization apparatus shown in FIG. 18, and similar configuration sections are assigned the same reference numerals and explanation thereof is omitted.

The present embodiment is characterized by having setting value determination section 1132 to determine whether the number of time data which is stored within a predetermined time is below a setting value when the threshold value is changed rather than fixed used on the comparison with correlation output, and threshold value correction section 1134 to correct the threshold value when the number of time data stored within a predetermined time is decided to be less than a setting value. In such a case, when it is decided that the stored number of time data is less than setting value, initial synchronizing location is controlled from the beginning using the corrected threshold value.

Here, as a threshold correction method, threshold value is initially set to a high value, and it is determined whether number of time data stored within a predetermined time is less than a setting value every time threshold is corrected, when it is below setting value, threshold value is multiplied by previously determined magnification factor, and the threshold value decreases by several dB's.

Operations of frame synchronization apparatus comprising the aforementioned configuration will be explained below.

First, reception signal of a predetermined time received from antenna is inputted into correlation output detecting section 1110, correlation output of the inputted reception signal of predetermined time and synchronization word is detected. In threshold value determining section 1120a comparison between the detected correlation output and threshold value (threshold value after correction if there were correction) is executed, and whether the detected correlation output exceeded threshold value is decided. Data of the time corresponding to correlation output which is determined to be exceeded threshold value as a determination result is stored in RAM of time data storing section 1130.

Then, setting value determination section 1132 determines whether the number of time data stored within a predetermined time is less than a setting value.

Moreover, referring to determination result, when the number of time data stored within predetermined time is less than the setting value, it is determined that the stored number of the time data is small, and threshold value is multiplied by magnification factor determined previously in threshold value correction section 1134, after the threshold value has been decreased by several dB's, initial synchronization process is carried out again from the beginning using the threshold value after correction.

On the other hand, when number of time data stored during predetermined time exceeds the setting value and enough stored number of the time data is determined, frequency distribution is generated in frequency distribution generating section 1140 using the stored time data. The maximum frequency in the generated frequency distribution is detected in maximum frequency detecting section 1150, and in standard value decision section 1152, it is decided whether the detected maximum frequency is smaller than standard value.

Referring to decision result, when the detected maximum frequency is less than the standard value, it is decided that initial synchronization time is erroneously detected, and initial synchronization processing is carried out again from the beginning.

On the other hand, when the detected maximum frequency exceeds the standard value, the time corresponding to the detected maximum frequency is set as an initial synchronization time in initial synchronization time detecting section 1160.

Thus, the frame synchronization apparatus according to the present embodiment determines the storing state of time data after comparing the stored number of the time data with setting value while detecting initial synchronization time, since initial synchronization processing is executed again from the beginning to correct the threshold value when the storing state is bad, threshold value can be optimally set according to channel propagation environment, and it is possible to improve precision of the decision processing that uses the threshold value. Moreover, when CI ratio is low, it is possible to detect precisely the initial synchronization time since the threshold value is optimally set.

In addition, although a determination standard of comparison whether standard value is below is carried out in setting value determination section 1132 according to the present embodiment, but it is not necessarily limited to this and any determination standard of comparison whether standard value is achieved can be used.

### (Embodiment 9)

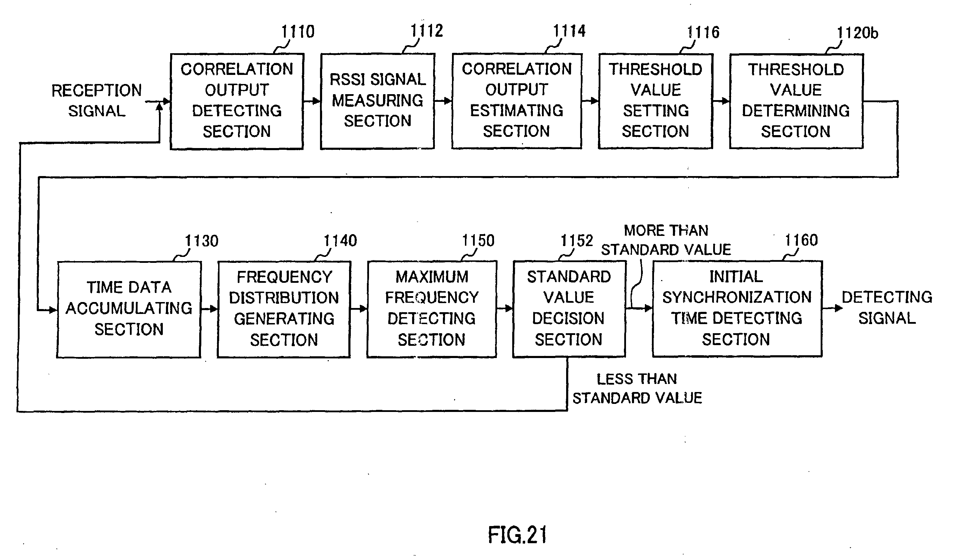

FIG. 21 is a block diagram showing a configuration of a frame synchronization apparatus according to Embodiment 9 of the present invention. Moreover, the basic configuration of such a frame synchronization apparatus is similar to frame synchronization apparatus shown in FIG. 18, and similar configuration sections are assigned the same reference numerals and explanation thereof is omitted.

The present invention is characterized by the setting of an optimum threshold value by estimating the level of correlation output using a measured received signal strength indicator (RSSI) signal rather than setting previously a threshold value using comparison with the correlation output and correct the used setting every time. Particularly, it is characterized by having RSSI signal measuring section 1112 to measure RSSI signal, correlation output estimating section 1114 to estimate correlation output level from measured RSSI signal, and threshold value setting section 1116 to set the optimum threshold value from the estimated correlation output level.

Operations of frame synchronization apparatus comprising the aforementioned configuration will be explained below.

First, reception signal of a predetermined time received from antenna is inputted into correlation output detecting section 1110, correlation output of the inputted reception signal of predetermined time and synchronization word is detected.

Then, in RSSI signal measuring section 1112, an RSSI signal is measured, and correlation output level is estimated from the measured RSSI signal in correlation output estimating section 1114. Next, optimum threshold value is set from the estimated correlation output level in threshold value setting section 1116.

In addition, the detected correlation output is compared to a set threshold value in threshold value determining section 1120b, and it is determined whether the detected correlation output exceeds threshold value. Then, time data corresponding to correlation output which is determined to be exceeded threshold value as a determination result is stored in RAM of time data storing section 1130.

Further, frequency distribution is generated in frequency distribution generating section 1140 using the stored time data. Then, maximum frequency in the generated frequency distribution is detected in maximum frequency detecting section 1150, and in standard value deciding section 1152, it is decided whether detected maximum frequency is smaller than standard value or not.

Referring to decision result, when the detected maximum frequency is less than the standard value, it is decided that initial synchronization time is erroneously detected, and initial synchronization processing is carried out again from the beginning.

When the detected maximum frequency exceeds standard value, the time corresponding to the detected maximum frequency is set as an initial synchronization time in initial synchronization time detecting section 1160.

Thus, the frame synchronization apparatus according to the present embodiment sets optimally the threshold value after estimating correlation output level using the measured RSSI signal, hence, an optimum threshold value can be set according to channel propagation environment, and it is possible to improve precision of the decision processing that uses threshold value. Moreover, a processing time of threshold value determination can be reduced since the determination of the optimum threshold value from the measured RSSI signal in carried out by one time processing.

The frame synchronization apparatus according to the present invention can be implemented in communication terminal apparatus (mobile station apparatus) or base station apparatus of a digital mobile communication system. Therefore, since a synchronization acquisition and synchronization tracking can be carried out precisely, good communication between communication terminal apparatus and base station apparatus can be provided.

The present invention is not limited to the aforementioned embodiments, and various changes can be made without varying from the scope of the invention.

As described above, the frame synchronization apparatus of the present invention can carry out acquisition synchronization and tracking synchronization precisely. In addition, frame synchronization apparatus of the present invention can minimize the hardware scale.

The present application is based on Japanese Patent Application No. 2001-117304 filed on Apr. 16, 2001 and Japanese Patent Application No. 2001-127484 filed on Apr. 25, 2001, entire content of which is expressly incorporated by reference herein.

### Industrial Applicability

The present invention is applicable in the case when using the correlation method to carry out synchronization acquisition and synchronization tracking.

## Claims

1. A frame synchronization apparatus comprising:
correlation value calculating section to calculate correlation value using a known signal included in a reception signal;
square error calculating section to calculate square error between an ideal correlation value that is time shifted by a predetermined shift and said correlation value being multiplied by a predetermined magnification factor; and
detecting section to detect a shifting time corresponding to the ideal correlation value at which the detected square error is minimum as a synchronization time.

2. The frame synchronization apparatus according to claim 1, wherein said correlation value calculating section calculates the correlation value of each branch using the reception signal of each branch, and said square error calculating section calculates the square error using only the correlation value which is located at the earliest time corresponding to maximum correlation value among correlation values of said each branch.

3. The frame synchronization apparatus according to claim 1, wherein said correlation value calculating section calculates the correlation value of each branch using the reception signal of each branch, and said square error calculating section calculates the square error using the result from accumulating the correlation value of said each branch.

4. A frame synchronization apparatus comprising:
correlation output detecting section to detect correlation output of a reception signal of a predetermined time and a known signal;
threshold value determining section to determine whether the detected correlation output is larger than a threshold value;
time data storing section to store data of the time corresponding to correlation output determined to be larger than the threshold;
frequency distribution generating section to generate frequency distribution using the stored time data;
maximum frequency detecting section to detect maximum frequency among the generated frequency distribution; and
initial synchronization time detecting section to assign the time of the detected maximum frequency as an initial synchronization time.

5. The frame synchronization apparatus according to claim 4, further comprising:
standard value decision section to decide whether the detected maximum frequency is lower than a standard value; and
controlling section to make initial synchronization processing to be carried out again from the beginning when the detected maximum frequency is decided to be lower than the standard value.

6. The frame synchronization apparatus according to claim 4, further comprising:
standard value decision section to decide whether the detected maximum frequency is lower than a standard value;
threshold value correction section to correct the threshold value when the detected maximum frequency is decided to be lower than the standard value; and
controlling section to make initial synchronization processing to be carried out again from the beginning using the corrected threshold value.

7. The frame synchronization apparatus according to claim 4, further comprising:
setting value decision section to decide whether the stored number of time data is lower than a setting value;
threshold value correction section to correct the threshold value when the stored number of time data is decided to be lower than the setting value; and
controlling section to make initial synchronization processing to be carried out again from the beginning using the corrected threshold value.

8. The frame synchronization apparatus according to claim 4, further comprising:
RSSI signal measuring section to measure RSSI signal;
correlation output estimating section to estimate the level of the correlation output from the measured RSSI signal; and
threshold value setting section to set an optimum threshold value from the estimated correlation output level,
wherein said threshold value determining section carries out determination processing using the set threshold value.

9. The frame synchronization apparatus according to claim 1 is provided in a communication terminal apparatus.

10. The frame synchronization apparatus according to claim 4 is provided in a communication terminal apparatus.

11. The frame synchronization apparatus according to claim 1 is provided in a base station apparatus.

12. The frame synchronization apparatus according to claim 4 is provided in a base station apparatus.

13. A frame synchronization method comprising:
correlation value calculating step of calculating correlation value using a known signal included in a reception signal;
square error calculating step of calculating square error between an ideal correlation value that is time shifted by only a predetermined shift and said correlation value being multiplied by a predetermined magnification factor; and
detecting step of detecting a shifting time corresponding to the ideal correlation value at which the detected square error is minimum as a synchronization time.

14. A frame synchronization method comprising:
correlation output detecting step of detecting correlation output of a reception signal of a predetermined time and a known signal;
threshold value determining step of determining whether the detected correlation output is larger than a threshold value;
time data storing step of storing data of the time corresponding to correlation output determined to be larger than the threshold;
frequency distribution generating step of generating frequency distribution using the stored time data;
maximum frequency detecting step of detecting maximum frequency among the generated frequency distribution; and
initial synchronization time detecting step of assigning the time of the detected maximum frequency as an initial synchronization time.

15. The frame synchronization method according to claim 14, further comprising:
standard value decision step of deciding whether the detected maximum frequency is lower than a standard value,
wherein initial synchronization processing is carried out again from the beginning when the detected maximum frequency is decided to be lower than the standard value.

16. The frame synchronization method according to claim 14, further comprising:
standard value decision step of deciding whether the detected maximum frequency is lower than a standard value;
threshold value correction step of correcting the threshold value when the detected maximum frequency is decided to be lower than the standard value,
wherein initial synchronization processing is to be carried out again from the beginning using the corrected threshold value when the detected maximum frequency is decided to be lower the standard value.

17. The frame synchronization method according to claim 14, further comprising:
setting value decision step of deciding whether the stored number of time data is lower than a setting value; and
threshold value correction step of correcting the threshold value when the stored number of time data is decided to be lower than the setting value,
wherein initial synchronization processing is to be carried out again from the beginning using the corrected threshold value when the stored number of the time data is decided to be lower the setting value.

18. The frame synchronization method according to claim 14, further comprising:
RSSI signal measuring step of measuring RSSI signal;
correlation output estimating step of estimating the level of the correlation output from the measured RSSI signal; and
threshold value setting step of setting an optimum threshold value from the estimated correlation output level,
wherein said threshold value determining step carries out determination processing using the set threshold value.
